# EUROPÄISCHE PATENTSCHRIFT

(11) **EP 1 391 149 B1**
(45) Veröffentlichungstag und Bekanntmachung des Hinweises auf die Patenterteilung: **28.02.2007**
(21) Anmeldenummer: 03102072.0
(22) Anmeldetag: 10.07.2003
(51) Int. Cl.: A01D 41/12, B60J 7/10

(54) **Abdeckung eines Fahrzeugs mit einem nach oben offenen Behälter**
Cover for a vehicle with open topped container
Recouvrement pour un véhicule avec un container ouvert au-dessus

(30) Priorität: 19.08.2002 US 223194
(43) Veröffentlichungstag der Anmeldung: 25.02.2004
(73) Patentinhaber: DEERE & COMPANY, Moline, Illinois 61265-8098 (US)
(72) Erfinder: Stephens, Nathaniel Herbert, Moline, IL 61265 (US); Neumann, Corey Ronald, Geneseo, IL 61254 (US)
(74) Vertreter: Holst, Sönke

(56) Entgegenhaltungen:
- DE-A- 4 320 565
- GB-A- 439 609
- US-A- 3 367 347
- US-A- 5 125 221

## Beschreibung

Die Erfindung betrifft eine Abdeckung eines Fahrzeugs mit einem nach oben offenen Behälter, mit einer Plane und einer zum Abstützen der Plane oberhalb des Behälters eingerichteten Trägerstruktur, die Beine umfasst, wobei obere Abschnitte der Beine in einer angehobenen Position miteinander in Verbindung stehen und untere Endabschnitte der Beine mit dem Fahrzeug verbunden sind.

Eine solche Abdeckung ist aus US-A-3 367 347 bekannt.

Es ist bekannt (US 5 125 221 A), landwirtschaftliche Mähdrescher mit einer Abdeckung zu versehen, die sich über die freiliegende Oberseite des Korntanks erstreckt. Derartige Abdeckungen umfassen typischerweise ein wasserdichtes Gewebe, das Regenwasser und andere Verunreinigungen von dem sich im Korntank ansammelnden Korn fernhält. Viele Korntankabdeckungen sind komplizierte Strukturen, bei denen beträchtliche Zeit und die Verwendung von Werkzeugen erforderlich sind, um sie anzubringen und abzumontieren. Andere Abdeckungen weisen Gewebe auf, das schlecht angepasst ist und es unerwünschten Ansammlungen von Wasser erlaubt, sich in Taschenbereichen zwischen Bereichen des Trägerrahmens zu bilden. Dieses angesammelte Wasser kann gelegentlich durch das Gewebe hindurchlecken und mit Berührung mit dem Korn im Korntank kommen. Einige im Stand der Technik bekannte Korntankabdeckungen müssen auseinander gebaut und von der Oberseite des Mähdreschers abgenommen werden, um einen Freiraum für den Mähdrescher zu schaffen, so dass er an Hindernissen vorbeikommt, wie beispielsweise beim Durchfahren eines Scheunentors. Der Prozess des Zusammenbaus und des Demontierens derartiger Abdeckungen kann komplexer und zeitaufwändiger sein als es wünschenswert wäre, setzt das Gewebe der Gefahr möglicher Risse aus und es kann Werkzeug verlegt werden oder verloren gehen.

Die der Erfindung zu Grunde liegende Aufgabe wird darin gesehen, eine Abdeckung bereitzustellen, bei der die erwähnten Probleme nicht mehr oder in einem verminderten Maß auftreten.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung stellt eine Abdeckung für ein Fahrzeug mit einem nach oben offenen Behälter bereit, beispielsweise für den Korntank eines Mähdreschers. Die Abdeckung umfasst eine Plane und eine Trägerstruktur, um die Plane über die ansonsten offene Oberseite des Behälters zu halten. Die Trägerstruktur umfasst Beine, die mit dem Fahrzeug bzw. dem Behälter verbunden sind. Der obere Abschnitt zumindest eines der Beine ist von den verbleibenden Beinen lösbar. Die Plane und die Trägerstruktur können auf diese Weise zwischen einer angehobenen Position für den Betrieb des Fahrzeugs und einer abgesenkten Position bewegt werden, in der sie sich innerhalb des Behälters befinden. Die Plane bewegt sich unter ihrem eigenen Gewicht nach unten, wenn die Trägerstruktur abgesenkt wird. Sie werden in der Regel nur dann abgesenkt, wenn der Behälter leer ist. Dadurch kann das Fahrzeug z. B. während des Transports unter Hindernissen hindurchfahren.

Die Erfindung eignet sich insbesondere zur Abdeckung eines Korntanks eines Mähdreschers.

Vorteile der Erfindung liegen darin, dass die Abdeckung leicht und schnell und ohne Verwendung von Werkzeugen zusammengebaut und zerlegt werden kann.

Die Beine sind vorzugsweise durch eine Rahmenstruktur nahe der Oberseite der Trägerstruktur miteinander verbunden. Die Rahmenstruktur stützt auch die Plane ab.

Eine Domstruktur, die insbesondere durch flexible, gekrümmte Stangen gestützt wird, die sich quer über die Rahmenstruktur erstrecken, weist den Vorteil auf, dass sich kein Regenwasser auf der Plane ansammeln kann.

Wenigstens ein Bein ist lösbar an der Trägerstruktur, im Konkreten an der Rahmenstruktur, angebracht. Es wird im Folgenden als zweites Bein bezeichnet. Es kann durch schnell anbringbare Verbindungsstifte mit Halterungen an der Rahmenstruktur verbunden werden. Auch an seinem unteren Endbereich kann das zweite Bein durch Schnellverbindungen lösbar mit dem Fahrzeug verbunden werden, z. B. durch Verbindungsstifte. In dieser Ausführungsform ist das gesamte zweite Bein von der Rahmenstruktur abnehmbar, um die Trägerstruktur zwischen der abgesenkten und der angehobenen Position bewegen zu können. Wenn es von der Rahmenstruktur und dem Fahrzeug getrennt ist, kann das zweite Bein innerhalb des Behälters abgelegt werden. Danach kann das erste Bein und die damit verbundene Rahmenstruktur nach unten in den Behälter geschwenkt werden. In einer anderen Ausführungsform ist das untere Ende des zweiten Beins schwenkbar am Fahrzeug angebracht und kann in eine abgesenkte Position innerhalb des Behälters platziert werden. Dann kann das erste Bein und die daran angebrachte Rahmenstruktur nach unten in den Behälter verbracht werden.

Die Plane ist vorzugsweise mit einer Öffnung versehen, durch die ein Bediener in das Innere der Abdeckung gelangen kann, um die Abdeckung zwischen der angehobenen und der abgesenkten Position zu bewegen. Die Öffnung wird insbesondere durch einen Reißverschluss oder andere geeignete Mittel, z. B. einen Klettverschluss oder Knöpfe, verschlossen.

Die Plane und die Trägerstruktur befinden sich in der abgesenkten Position vorzugsweise innerhalb des Behälters.

Der untere Endabschnitt mindestens eines Beins, das im Folgenden als erstes Bein bezeichnet wird, ist vorzugsweise schwenkbar mit dem Fahrzeug verbunden. Es bleibt zweckmäßigerweise auch dann schwenkbar mit dem Fahrzeug verbunden, wenn es zwischen der angehobenen und der abgesenkten Position bewegt wird, nimmt somit einen Teil des Gewichts der Trägerstruktur und der Plane auf. Die Schwenkverbindung kann durch Bolzen oder Stifte erfolgen. Der obere Abschnitt des ersten Beins kann starr oder ebenfalls schwenkbar mit der Trägerstruktur verbunden werden, wozu Bolzen oder Stifte dienen, die das erste Bein mit einer Halterung verbindet, welche an der Rahmenstruktur befestigt ist. Die Rahmenstruktur bleibt somit fest mit dem ersten Bein verbunden, wenn sie zwischen der angehobenen und der abgesenkten Position bewegt wird.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in dem ein Querschnitt durch den Korntank des Mähdreschers und eine darüber angebrachte erfindungsgemäße Abdeckung des Korntanks dargestellt sind,
- Fig. 2: eine perspektivische Ansicht der Korntankerhöhungen und der Abdeckung des Korntanks in der angehobenen Position, wobei die Abdeckung in Phantomlinien gezeigt ist und der Mähdrescher und der Korntank nicht gezeigt werden,
- Fig. 3: eine perspektivische, vergrößerte Teilexplosionsansicht der ersten und zweiten Beine, der Verbindungsstifte, Halterungen und der Rahmenstruktur aus Figur 2,
- Fig. 4: eine perspektivische, vergrößerte Teilexplosionsansicht eines zweiten Beins, des Verbindungsstifts, der Halterung und der Rahmenstruktur aus Figur 2,
- Fig. 5: eine von der Seite her betrachtete perspektivische Ansicht der Trägerstruktur und der Abdeckung in der angehobenen Position, wobei der Mähdrescher, der Korntank und die Erhöhungen nicht gezeigt werden,
- Fig. 6: eine Schnittansicht des Korntanks und der Trägerstruktur, wobei letztere sowohl in der abgesenkten als auch in der angehobenen Position gezeigt wird, und
- Fig. 7: eine perspektivische Ansicht des Halteelements und des Streifens, die die Abdeckung an den Erhöhungen des Korntanks halten.

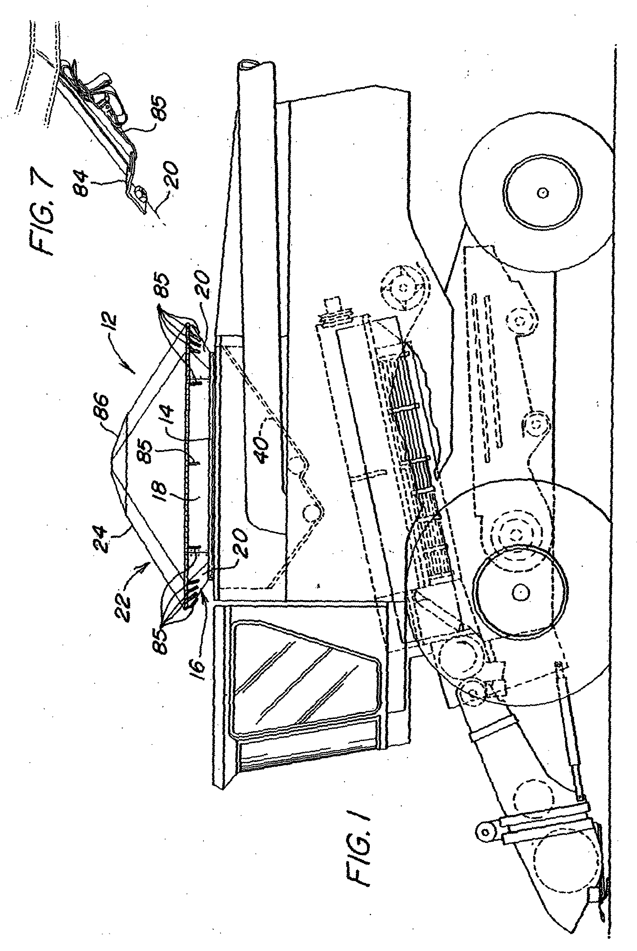

Es wird Bezug auf die Figur 1 genommen, in der eine Seitenansicht eines landwirtschaftlichen Mähdreschers 10 gezeigt ist. Aus dem geernteten Gut abgetrenntes Korn wird einem nahe der Oberseite des Mähdreschers 10 angeordneten Korntank 12 zugeführt. An der Oberseite des Korntanks 12 sind Erhöhungen 16, die sich von den oberen, äußeren Kanten 14 des Korntanks 12 nach oben erstrecken. Die Erhöhungen 16 ermöglichen es, dass sich Korn im Korntank 12 auch oberhalb der oberen äußeren Kanten 14 des Korntanks 12 ansammelt und halten somit zusätzliches Korn fest. Die Erhöhungen 16 umfassen vier in sich starre Seitenplatten 18 und Eckabschnitte 20.

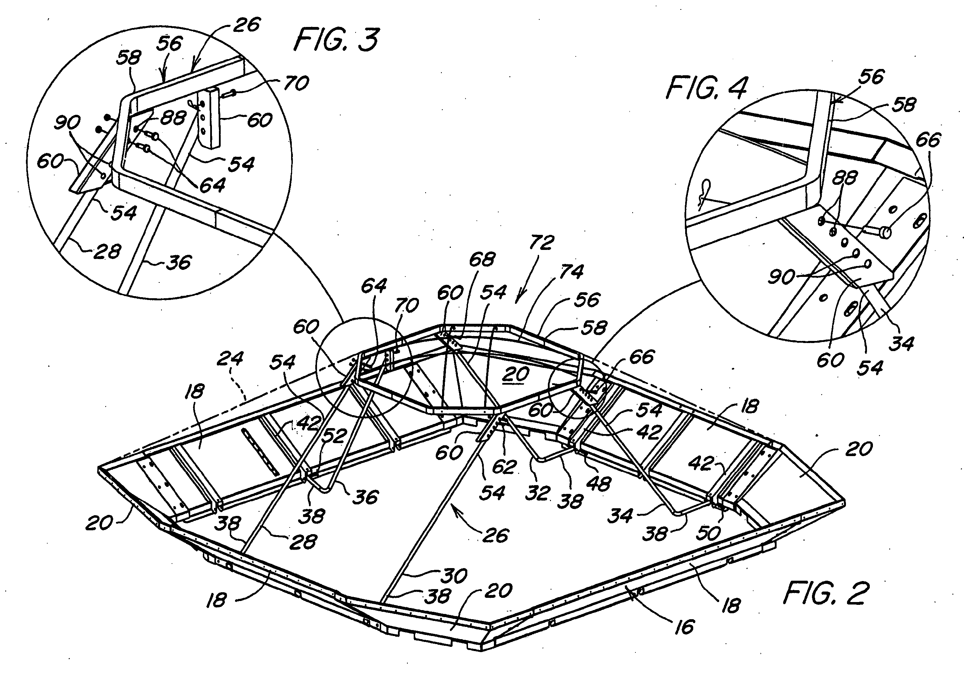

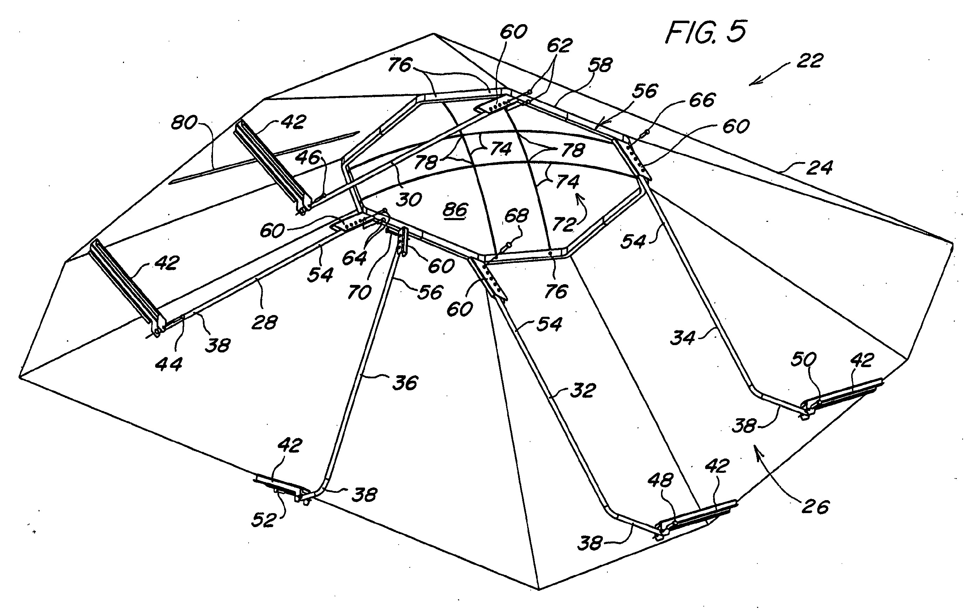

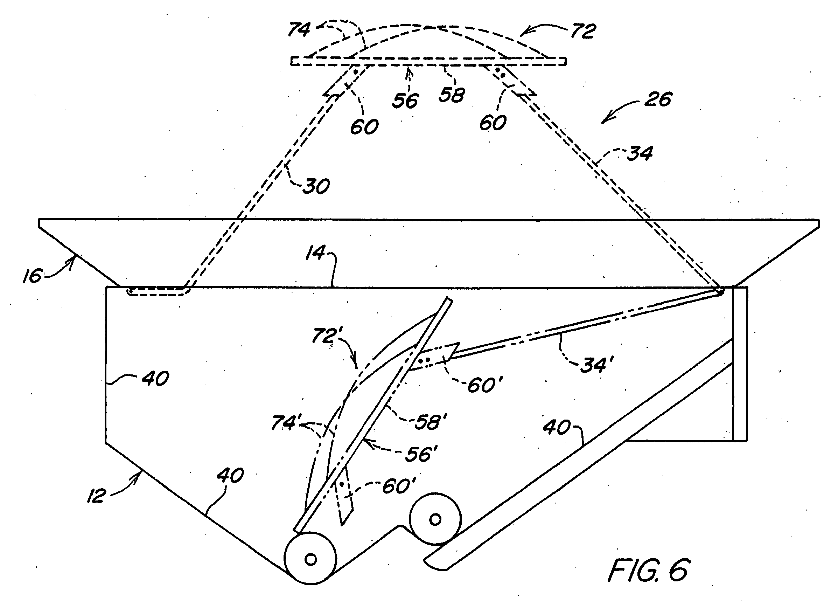

Die vorliegende Erfindung stellt eine Abdeckung 22 des Korntanks 12 bereit, die eine wasserdichte Plane 24 aus Gewebe umfasst, welche von einer durch den Mähdrescher 10 getragenen Trägerstruktur 26 gehalten wird. Gemäß der bevorzugten Ausführungsform umfasst die Trägerstruktur 26, wie am Besten anhand der Figuren 2-6 erkennbar ist, fünf Beine 28, 30, 32, 34, 36, die untere Endabschnitte 38 aufweisen, welche nahe der inneren Wände 40 des Korntanks 12 schwenkbar mit dem Mähdrescher 10 gekoppelt sind. An den Erhöhungen 16 befestigte Halterungen 42 nehmen Verbindungsstifte 44-52 auf, die mit den unteren Endabschnitten 38 der Beine 28-36 im Eingriff stehen. Die Verbindungsstifte 44 und 46 ermöglichen es, erste Beine 28, 30 um die Achsen zu verschwenken, die durch die zugehörigen Verbindungsstifte 44 und 46 definiert werden. Die ersten Beine 28 und 30 schwenken um die Verbindungsstifte 44, 46 zwischen angehobenen und abgesenkten Positionen, wie weiter unten detaillierter beschrieben wird.

Wenn sie sich in ihrer angehobenen Position befinden, stehen die oberen Abschnitte 54 der Beine 28-36 untereinander über eine Rahmenstruktur 56 in Verbindung. Die Rahmenstruktur 56 umfasst ein röhrenförmiges, achteckiges Element 58. Halterungen 60 erstrecken sich von der Rahmenstruktur 56 und stellen einen Aufbau bereit, an dem die oberen Abschnitte 54 der Beine 28-36 angebracht sind. Stifte oder Bolzen 62-70 koppeln die oberen Abschnitte 54 der Beine 28-36 an die Halterungen 60 der Rahmenstruktur 56.

Eine Domstruktur 72 ist oberhalb der Rahmenstruktur 56 bereitgestellt. Flexible Stangen 74 erstrecken sich jeweils in Bögen von einer Seite der Rahmenstruktur 56 zur anderen. Die Enden der Stangen 74 sind innerhalb von in der Rahmenstruktur 56 vorgesehenen Öffnungen 76 positioniert. Dort, wo sich die Stangen 74 kreuzen, sind Kabelverbinder 78 bereitgestellt, um die Domstruktur 72 und die Rahmenstruktur 56 zu versteifen.

Die Rückseite der Plane 24 umfasst eine Öffnung 80 mit einem Reißverschluss, die von einem Bediener geöffnet werden kann, um ihm den Zugang in den Korntank 12 und das Verlassen des Korntanks 12 zu ermöglichen, während die Plane 24 und die Trägerstruktur 26 mit dem Mähdrescher 10 verbunden sind. Der Bediener kann den Reißverschluss öffnen und sich durch die Öffnung 80 hindurch begeben, um den leeren Korntank 12 zu betreten und dort die Plane 24 und die Trägerstruktur 26 zwischen der angehobenen und der abgesenkten Position zu verschieben. In den Wänden 40 des Korntanks 12 geformte Stufen ermöglichen es dem Bediener, geeignete Standpunkte für seine Füße zu finden, wenn er sich im Korntank 12 befindet. Der Bediener kann den Korntank 12 durch die mit dem Reißverschluss versehene Öffnung 80 verlassen, wenn er das Anheben oder Absenken der Trägerstruktur 26 beendet hat.

Die Plane 24 ist mit den Erhöhungen 16 jeweils durch Halteelemente 84 und Streifen 85 oder andere geeignete Verbindungsmechanismen verbunden. Wie am Besten anhand der Figur 7 erkennbar ist, erstrecken sich die Streifen 85 von der unteren Kante der Plane 24 nach unten. Der Streifen 85 ist durch das zugehörige Halteelement 84 geschlungen, das zum Beispiel durch Bolzen mit einer Erhöhung 16 verbunden ist. Die Plane 24 bleibt durch die Streifen 85 und das Halteelement 84 mit den Erhöhungen 16 verbunden, sowohl wenn die Abdeckung 22 sich in der angehobenen, als auch wenn sie sich in der abgesenkten Position befindet.

Im Folgenden wird die Betriebsweise der vorliegenden Erfindung genauer beschrieben. Wenn sie sich in der angehobenen Position befinden, sind die Plane 24 und die Trägerstruktur 26 wie in den Figuren 1 bis 5 dargestellt. Um die Plane 24 und die Trägerstruktur 26 in die abgesenkte Position zu verbringen, kann der Bediener die mit Reißverschluss versehene Öffnung 80 öffnen, um den leeren Korntank 12 zu betreten und unter die Plane 24 zu gelangen. Während er im Korntank 12 nahe der Rahmenstruktur 56 steht, kann der Bediener die Verbindungsstifte 48 und 50 abnehmen, die die unteren Enden der vorderen Beine 32 und 34 mit den jeweiligen Halterungen 42 verbinden. Der Bediener nimmt auch den unteren Endabschnitt 38 des sich seitlich erstreckenden Beins 36 ab, indem er den Verbindungsstift 52 aus der zugehörigen Halterung 42 entfernt. Nachdem die unteren Endabschnitte 38 dieser drei Beine 32, 34, 36, die im Folgenden als zweite Beine bezeichnet werden, von den jeweiligen Halterungen 42 abgenommen wurden, kann der Bediener sie von der Rahmenstruktur 56 abnehmen, indem er die jeweiligen Verbindungsstifte 66, 68, 70 entfernt, die die zweiten Beine 32, 34, 36 mit der Rahmenstruktur 56 verbinden. Der Bediener nimmt dadurch die zweiten Beine 32, 34, 36 vom Mähdrescher 10 und dann von der Rahmenstruktur 56 ab und legt sie in den Korntank 12. Wenn die drei zweiten Beine 32, 34, 36 sich in ihrer unteren Position innerhalb des Korntanks 12 befinden, kann der Bediener die hinteren beiden Beine 28 und 30 und die Rahmenstruktur 55 nach unten in den Korntank 12 schwenken. Die hinteren Beine 28 und 30, die hier als erste Beine bezeichnet werden, und die Rahmenstruktur 56 verbleiben miteinander durch die Verbindungsstifte 44, 46 verbunden und schwenken somit als Einheit um die Achsen, die durch die innerhalb der Halterungen 42 befindlichen Verbindungsstifte 44 und 46 an der Rückseite des Korntanks 12 definiert werden. Wenn diese ersten Beine 28, 30 und die Rahmenstruktur 56 nach unten verschwenken, fällt die Plane 24 unter ihrem eigenen Gewicht in den Korntank 12. Wenn sie sich in einer abgesenkten Position befinden, sind die Plane 24 und die Trägerstruktur 26 innerhalb des Korntanks 12 positioniert, und stellen dadurch Freiraum für ein Verschwenken der Seitenplatten 18 ebenfalls nach innen und unten in den Korntank 12 bereit. Wenn sie sich in der unteren Position befinden, sind die Trägerstruktur 26, die Plane 24 und die Erhöhungen 16 somit innerhalb des Korntanks 12 positioniert und stellen auf diese Weise einen Freiraum für den Mähdrescher 10 bereit, um unter niedrigeren oberen Begrenzungen hindurchzufahren, wie durch Türen von Schuppen oder Lagergebäuden.

Falls der Bediener die Abdeckung 22 vor der Wiederaufnahme von Erntearbeiten wieder anheben will, hebt der Bediener die Erhöhungen 16 in ihre angehobenen Positionen an. Der Bediener steht dann in der mit Reißverschluss versehenen Öffnung 80 und hebt die Rahmenstruktur 56 nach oben an, was dazu dient, die Plane 24 anzuheben. Wenn der Bediener die Rahmenstruktur 56 anhebt, verschwenken die Rahmenstruktur 56 und die ersten Beine 28 und 30 als Einheit um die Verbindungsstifte 44, 46 an der Rückseite des Korntanks 12. Sobald die Rahmenstruktur 56 und das Paar der ersten Beine 28, 30 angehoben sind, kann der Bediener leichter in das Innere der Plane 24 gelangen und eines der zweiten Beine ergreifen, wie das Bein 32, das im Korntank 12 liegt. Der Bediener verbindet dieses zweite Bein 32 mit der Halterung 60 der Rahmenstruktur 56 und verbindet das untere Ende dieses zweiten Beins 32 mit der jeweiligen von der Erhöhung 16 getragenen Halterung 42. Wenn diese drei Beine 28, 30, 32 an die Rahmenstruktur 56 gekoppelt sind und sie abstützen, wird die Rahmenstruktur 56 in der angehobenen Position abgestützt bleiben, so dass der Bediener die Trägerstruktur 26 unterhalb der Plane 24 nicht mehr von Hand zu halten braucht. Der Bediener kann dann damit fortfahren, die verbleibenden zweiten Beine 34 und 36 zu positionieren und beide Hände verwenden, um sie mittels der Verbindungsstifte 50, 52 an den jeweiligen Halterungen 60 der Rahmenstruktur 56 zu befestigen. Der Bediener kann dann die unteren Endabschnitte 38 dieser verbleibenden Beine 34, 36 an den zugehörigen Halterungen 42, die an den Erhöhungen 16 angebracht sind, ankoppeln. Wenn alle Beine 28, 30, 32, 34 und 36 durch die Rahmenstruktur 56 aneinander gekoppelt sind, wird die Trägerstruktur 26 in der angehobenen Position sicher gehalten. Der Bediener verlässt dann den Korntank 12 durch die mit dem Reißverschluss versehene Öffnung 80, schließt den Reißverschluss hinter sich und fährt dann mit dem Erntevorgang fort.

Die an der Rahmenstruktur 56 angebrachten Halterungen 60 haben mehrere Öffnungen 88, 90, die es erlauben, die Beine 28, 30, 32, 34, 36 an einer Vielzahl von Positionen mit den Halterungen 60 zu verbinden. Wenn die Plane 24 sich nach längerer Betriebszeit streckt, kann der Bediener die Beine 28, 30, 32, 34, 36 mittels der unteren Öffnungen 90 mit den Halterungen 60 verbinden, welche dazu dienen werden, die Rahmenstruktur 56 in einer größeren Höhe über dem Korntank 12 abzustützen. Das wird dazu dienen, die Ausdehnung der Plane 24 auszugleichen und dadurch Ansammlungen von Wasser auf der Plane 24 zu vermeiden, indem die Plane 24 in einer relativ straffen Weise gehalten wird.

Bei der bevorzugten Ausführungsform sind die Beine 28, 30, 32, 34, 36, die Rahmenstruktur 56 und die Erhöhungen 16 in das Innere des Korntanks 12 verlagerbar, um den Umriss des Mähdreschers 10 zu verkleinern und eine maximale Freiheit für den Mähdrescher 10 unterhalb von Hindernissen und Türen zu ermöglichen. Die Trägerstruktur 26 könnte jedoch auch derart konfiguriert sein, dass ein Teil von ihr sich oberhalb der oberen Kante 14 des Korntanks 12 erstreckt, wenn sie sich in der abgesenkten Position befindet. In ähnlicher Weise könnte die erfindungsgemäße Abdeckung 22 mit Erhöhungen 16 verwendet werden, die nicht nach unten in den Korntank 12 schwenkbar sind. Die vorliegende Erfindung könnte auch an einem Korntank 12 verwendet werden, der keine Erhöhungen 16 aufweist. Jedenfalls ist die erfindungsgemäße Abdeckung 22 für den Korntank 12 in eine abgesenkte Position einfaltbar, in der der Umriss des Mähdreschers wirkungsvoll verkleinert wird, so dass er unter niedrigeren Hindernissen hindurchfahren kann, als wenn sich die Abdeckung 22 in ihrer angehobenen Position befindet.

Die in den Zeichnungen dargestellte, bevorzugte Ausführungsform umfasst fünf Beine 28, 30, 32, 34 und 36, die die Rahmenstruktur 56 abstützen. Das seitliche Bein 36 fügt der Trägerstruktur 26 zusätzliche Festigkeit in seitlicher Richtung hinzu. Es kann jedoch auch eine andere Anzahl an Beinen bereitgestellt werden oder an anderen Stellen. Außerdem sind die Halterungen 42 in den Zeichnungen und in der obigen Beschreibung an den Erhöhungen 16 des Korntanks 12 angebracht. Die Halterungen 42, die die unteren Endabschnitte 38 der Beine 28, 30, 32, 34 und 36 abstützen, können auch mit den inneren Wänden 40 des Korntanks 12 verbunden werden.

In der angehobenen Position stützen die flexiblen Stangen 74, die das Festhalten der Domstruktur 72 unterstützen, die Plane 24 in einer Weise ab, dass die Plane 24 an dieser Stelle nicht absinkt. Die Stangen 74 verhindern daher, dass sich Wasser in dieser Umgebung ansammelt. Die Stangen 74 verleihen außerdem der Rahmenstruktur 56 Steifheit.

Die in den Figuren 1 bis 6 gezeigte Ausführungsform zeigt eine Vielzahl zweiter Beine 32, 34, 36, die am Mähdrescher 10 angebracht oder von ihm abgenommen werden, wenn die Trägerstruktur 26 in die abgesenkte Position verbracht wird. Alternative Ausführungsformen der vorliegenden Erfindung könnten auch mit zweiten Beinen 32, 34, 36 ausgestattet werden, deren unteren Endabschnitte 38 schwenkbar mit dem Mähdrescher 10 verbunden bleiben, wenn die zweiten Beine 32, 34, 36 in ihre abgesenkten Positionen verschoben werden. Die zweiten Beine 32, 34, 36 könnten beispielsweise um ihre jeweiligen Verbindungsstifte 48, 50, 52 in den Halterungen 42 in ihre unteren Positionen verschwenkt werden. In den unteren Positionen wären die zweiten Beine 32, 34, 36 angepasst, für die ersten Beine 28, 30 und die Rahmenstruktur 56 hinreichenden Freiraum zu bieten, damit diese nach unten in den Korntank 12 verschwenken können, um ihre abgesenkte Position einzunehmen.

Die Eckabschnitte 20 der Erhöhungen 16 sind als starre Elemente gezeigt, die vom Mähdrescher 10 abgenommen und im Korntank 12 platziert werden können, wenn die Abdeckung 22 in die abgesenkte Position verschoben wird. Eckabschnitte 20 könnten auch aus einem flexiblen Gewebematerial sein, welches an den starren Seitenplatten 18 angebracht bleiben könnte, wenn die Seitenplatten sich zwischen ihren angehobenen und abgesenkten Positionen bewegen.

Die vorliegende Erfindung ist zuvor anhand einer Ausführung, die für die Verwendung an einem Mähdrescher 10 angepasst wurde, beschrieben und in den Zeichnungen dargestellt worden. Sie ist jedoch auch an andere Fahrzeuge mit nach oben offenen Behältern zur Aufnahme von Materialien, Flüssigkeiten oder Körnern anpassbar. Ein Beispiel eines derartigen Fahrzeugs ist ein Transportwagen für Korn.

## Patentansprüche

1. Abdeckung (22) für ein Fahrzeug mit einem nach oben offenen Behälter, mit einer Plane (24) und einer zum Abstützen der Plane (24) oberhalb des Behälters eingerichteten Trägerstruktur (26), die Beine (28-36) umfasst, wobei obere Abschnitte (54) der Beine (28-36) in einer angehobenen Position miteinander in Verbindung stehen und untere Endabschnitte (38) der Beine (28-36) mit dem Fahrzeug verbindbar sind, **dadurch gekennzeichnet, dass** der obere Abschnitt (54) zumindest eines der Beine (32, 34, 36) von den verbleibenden Beinen lösbar und im abgelösten Zustand nach unten in eine abgesenkte Position verbringbar ist, in der auch die Trägerstruktur und die Plane (24) eine abgesenkte Position annehmen.

2. Abdeckung (22) nach Anspruch 1, **dadurch gekennzeichnet, dass** die Trägerstruktur (26) eine sich zwischen den oberen Abschnitten (54) der Beine (28-36) erstreckende Rahmenstruktur (56) umfasst.

3. Abdeckung (22) nach Anspruch 2, **dadurch gekennzeichnet, dass** eine an der Oberseite der Abdeckung (22) angeordnete Domstruktur (72) mit der Rahmenstruktur (56) verbunden ist.

4. Abdeckung (22) nach Anspruch 3, **dadurch gekennzeichnet, dass** die Domstruktur (72) bogenförmige Stangen (74) aufweist, die mit der Rahmenstruktur (56) verbunden sind.

5. Abdeckung (22) nach einem der Ansprüche 2 bis 4, **dadurch gekennzeichnet, dass** die Beine (28-36) durch die Rahmenstruktur (56) untereinander verbunden sind, wobei wenigstens ein zweites Bein (32, 34, 36) der Beine (28-36) von der Rahmenstruktur (56) abnehmbar ist.

6. Abdeckung (22) nach einem der Ansprüche 1 bis 5, **dadurch gekennzeichnet, dass** die Plane (24) eine Öffnung (80) aufweist, durch die ein Bediener hindurchgelangen kann, um die Abdeckung (22) zwischen einer angehobenen und einer abgesenkten Position zu bewegen.

7. Abdeckung (22) nach Anspruch 6, **dadurch gekennzeichnet, dass** die Öffnung (80) durch einen Reißverschluss verschließbar ist.

8. Abdeckung (22) nach einem der Ansprüche 1 bis 7, **dadurch gekennzeichnet, dass** die Beine (28-36) und die Plane (24) in der abgesenkten Position innerhalb des Behälters positioniert sind.

9. Abdeckung (22) nach einem der Ansprüche 1 bis 8, **dadurch gekennzeichnet, dass** untere Endabschnitte (38) der Beine (28-36) in der angehobenen Position am Behälter angebracht sind.

10. Abdeckung (22) nach einem der Ansprüche 1 bis 9, **dadurch gekennzeichnet, dass** der untere Endabschnitt (38) wenigstens eines ersten Beines (28, 30) der Beine (28-36) schwenkbar mit dem Fahrzeug verbunden ist.

11. Abdeckung (22) nach Anspruch 10, **dadurch gekennzeichnet, dass** der untere Endabschnitt (38) des ersten Beines (28, 30) schwenkbar mit dem Fahrzeug verbunden bleibt, wenn das erste Bein (28, 30) zwischen der angehobenen und der abgesenkten Position verschwenkt wird.

12. Fahrzeug, mit einem nach oben offenen Behälter, insbesondere Mähdrescher (10) mit einem Korntank (12), **dadurch gekennzeichnet, dass** oberhalb des Behälters eine Abdeckung nach einem der vorhergehenden Ansprüche angebracht ist.

## Claims

1. Cover (22) for a vehicle with an open topped container, with a tarpaulin (24) and a support structure (26), which is fitted to support the tarpaulin (24) above the container and has legs (28-36), wherein upper sections (54) of the legs (28-36) connect with one another in a raised position and lower end sections (38) of the legs (28-36) can be connected to the vehicle, **characterised in that** the upper section (54) of at least one of the legs (32, 34, 36) can be detached from the remaining legs and in the detached state can be moved downwards into a lowered position, in which the support structure and the tarpaulin (24) also assume a lowered position.

2. Cover (22) according to Claim 1, **characterised in that** the support structure (26) includes a frame structure (56) extending between the upper sections (54) of the legs (28-36).

3. Cover (22) according to Claim 2, **characterised in that** a dome structure (72) arranged on the upper side of the cover (22) is connected to the frame structure (56).

4. Cover (22) according to Claim 3, **characterised in that** the dome structure (72) has arc-shaped rods (74), which are connected to the frame structure (56).

5. Cover (22) according to one of Claims 2 to 4, **characterised in that** the legs (28-36) are interconnected by means of the frame structure (56), wherein at least one second leg (32, 34, 36) of the legs (28-36) can be detached from the frame structure (56).

6. Cover (22) according to one of Claims 1 to 5, **characterised in that** the tarpaulin (24) has an opening (80), through which an operator can reach in order to move the cover (22) between a raised and a lowered position.

7. Cover (22) according to Claim 6, **characterised in that** the opening (80) can be closed by a zip fastener.

8. Cover (22) according to one of Claims 1 to 7, **characterised in that** the legs (28-36) and the tarpaulin (24) are positioned in the lowered position inside the container.

9. Cover (22) according to one of Claims 1 to 8, **characterised in that** lower end sections (38) of the legs (28-36) are attached to the container in the raised position.

10. Cover (22) according to one of Claims 1 to 9, **characterised in that** the lower end section (38) of at least one first leg (28, 30) of the legs (28-36) is pivotally connected to the vehicle.

11. Cover (22) according to Claim 10, **characterised in that** the lower end section (38) of the first leg (28, 30) remains pivotally connected to the vehicle when the first leg (28, 30) is pivoted between the raised and the lowered position.

12. Vehicle with an open topped container, in particular a combine-harvester (10) with a grain tank (12), **characterised in that** a cover according to one of the preceding claims is attached above the container.

## Revendications

1. Système de couverture (22) pour un véhicule muni d'un réservoir ouvert vers le haut, comportant une bâche (24) et une structure de support (26), qui est conçue pour supporter la bâche (24) au-dessus du réservoir et qui comporte des pieds (28-36), des parties supérieures (54) des pieds (28-36) étant reliées entre elles dans une position relevée, et des parties d'extrémité inférieures (38) des pieds (28-36) pouvant être assemblées au véhicule, **caractérisé en ce que** la partie supérieure (54) d'au moins un des pieds (32, 34, 36) peut être désolidarisée des autres pieds et, dans la position désolidarisée, peut être amenée vers le bas dans une position abaissée, dans laquelle la structure de support et la bâche (24) sont également amenées dans une position abaissée.

2. Système de couverture (22) selon la revendication 1, **caractérisé en ce que** la structure de support (26) comporte une structure en forme de dôme s'étendant entre les parties supérieures (54) des pieds (28-36).

3. Système de couverture (22) selon la revendication 2, **caractérisé en ce qu'**une structure en forme de dôme, disposée sur le côté supérieur du système de couverture (22), est reliée à la structure en forme de cadre (56).

4. Système de couverture (22) selon la revendication 3, **caractérisé en ce que** la structure en forme de dôme (72) comporte des barres (74) courbes, qui sont reliées à la structure en forme de cadre (56).

5. Système de couverture (22) selon l'une quelconque des revendications 2 à 4, **caractérisé en ce que** les pieds (28-36) sont reliés les uns aux autres par l'intermédiaire de la structure en forme de cadre (56), au moins un deuxième pied (32, 34, 36) parmi les pieds (28-36) pouvant être retiré de la structure en forme de cadre (56).

6. Système de couverture (22) selon l'une quelconque des revendications 1 à 5, **caractérisé en ce que** la bâche (24) comporte une ouverture (80) à travers laquelle peut accéder une personne de service pour déplacer le système de couverture (22) entre une position relevée et une position abaissée.

7. Système de couverture (22) selon la revendication 6, **caractérisé en ce que** l'ouverture (80) peut être fermée au moyen d'une fermeture éclair.

8. Système de couverture (22) selon l'une quelconque des revendications 1 à 7, **caractérisé en ce que**, dans la position abaissée, les pieds (28-36) et la bâche (24) sont positionnés à l'intérieur du réservoir.

9. Système de couverture (22) selon l'une quelconque des revendications 1 à 8, **caractérisé en ce que**, dans la position relevée, des parties d'extrémité inférieures (38) des pieds (28-36) sont montées sur le réservoir.

10. Système de couverture (22) selon l'une quelconque des revendications 1 à 9, **caractérisé en ce que** la partie d'extrémité inférieure (38) d'au moins un premier pied (28, 30) parmi les pieds (28-36) est reliée de manière pivotante au véhicule.

11. Système de couverture (22) selon la revendication 10, **caractérisé en ce que** la partie d'extrémité inférieure (38) du premier pied (28, 30) reste assemblée de manière pivotante au véhicule lorsque le premier pied (28, 30) pivote entre la position relevée et la position abaissée.

12. Véhicule muni d'un réservoir ouvert vers le haut, en particulier une moissonneuse-batteuse (10) munie d'un réservoir à grains (12), **caractérisé en ce qu'**un système de couverture selon l'une quelconque des revendications précédentes est monté au-dessus du réservoir.
